# EUROPÄISCHE PATENTSCHRIFT

(11) **EP 2 946 271 B1**
(45) Veröffentlichungstag und Bekanntmachung des Hinweises auf die Patenterteilung: **02.10.2019**
(21) Anmeldenummer: 13821066.1
(22) Anmeldetag: 14.12.2013
(51) Int. Cl.: G06F 3/038, G06F 3/0354

(54) **LENKRAD MIT VERBESSERTER SCHNITTSTELLE ZU EINEM FINGERNAVIGATIONSMODUL**
STEERING WHEEL WITH IMPROVED INTERFACE TO A FINGER NAVIGATION MODULE
VOLANT DOTÉ D'UNE INTERFACE AMÉLIORÉE DESTINÉE À UN MODULE DE NAVIGATION TACTILE

(30) Priorität: 19.01.2013 DE 102013000944
(43) Veröffentlichungstag der Anmeldung: 25.11.2015
(73) Patentinhaber: Daimler AG, 70327 Stuttgart (DE)
(72) Erfinder: CHEUNG, Kwok Chiu, Hong Kong (CN); ENTENMANN, Volker, 71563 Affalterbach (DE); KAIL, Andreas, 97616 Bad Neustadt (DE); MU, Jing, San Jose, CA 95134 (US); REISINGER, Jörg, 74369 Löchgau (DE); STOTZEM, Manuel, 97618 Wülfershausen an der Saale (DE)
(74) Vertreter: JENSEN & SON
(86) Internationale Anmeldenummer: PCT/EP2013/003780
(87) Internationale Veröffentlichungsnummer: WO 2014/111111

(56) Entgegenhaltungen:
- CN-U- 202 389 433
- "Motorola SPI Block Guide V03.06", , 4. Februar 2003 (2003-02-04), Seiten 1-38, XP055113946, Gefunden im Internet: URL:http://www.ee.nmt.edu/~teare/ee308l/da tasheets/S12SPIV3.pdf [gefunden am 2014-04-14]

## Beschreibung

Die vorliegende Erfindung betrifft ein Lenkrad für ein Kraftfahrzeug mit einem optischen Fingernavigationsmodul, einer Lenkradelektronik und einer Kommunikationseinrichtung zur Datenübertragung zwischen dem optischen Fingernavigationsmodul und der Lenkradelektronik.

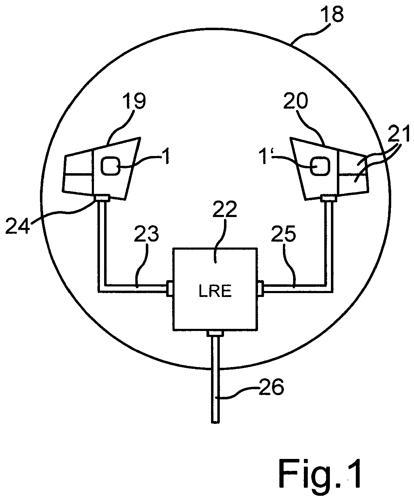

In den Schalterblock eines Fahrzeuglenkrads kann ein optisches Fingernavigationsmodul (OFN) als Sensor für die Detektion von Fingerbewegungen integriert werden. Die Sensordaten müssen über eine Datenbusverbindung vom OFN zur Lenkradelektronik (LRE); vgl. Fig. 1) übertragen werden. Dabei ist der für die Stecker- und Kabelverbindungen verfügbare Bauraum im Lenkrad stark begrenzt. Zudem sollte die Kommunikation zwischen dem OFN und der Lenkradelektronik robust gegen äußere Störeinflüsse sein und mit der Datenübertragung von der Lenkradelektronik zu einem Mantelrohrschaltermodul in der Lenksäule synchronisiert werden.

Aus der CN202389433U ist ein Lenkrad mit einem OFN und einem zugehörigen Controller (Host-MCU) bekannt, wobei das OFN mit einem Controller über eine digitale Datenleitung verbunden ist. Weiter ist der Controller mit einem Touchscreen oder einem Display verbunden.

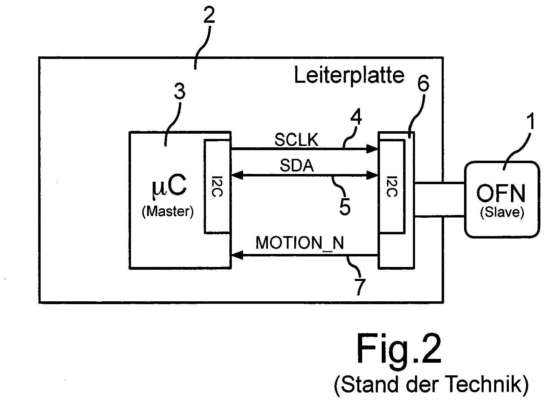

In der so genannten "Consumer Elektronik" wird häufig ebenfalls ein OFN 1 eingesetzt (vgl. Fig. 2). Dort wird das OFN 1 direkt mit einer Leiterplatte 2 verbunden, auf der auch ein Mikrocontroller 3 sitzt, der die OFN-Daten auswertet.

In der Consumer Elektronik kommunizieren OFN 1 und Mikrocontroller 3 in der Regel über eine I2C-Schnittstelle (Inter-Intergrated-Circuit) miteinander. Diese serielle Schnittstelle ist für die Kommunikation zwischen Controllern auf einer Platine ausgelegt und benötigt nur zwei Signalleitungen 4 und 5 (Serial Clock SCLK und Signal Data SDA). Detektiert das OFN auf seiner Oberfläche eine Fingerbewegung, initiiert es eine Kommunikation mit dem Mikrocontroller 3, indem es einen Interrupt an den Mikrocontroller 3 sendet. Hierzu ist eine eine Interrupt-Leitung 7 (MOTION_N) zwischen dem OFN 1 und dem Mikrocontroller 3 erforderlich. Insgesamt sind für den Betrieb also drei Leitungen notwendig. Für die im Lenkrad notwendige Datenübertragung zwischen dem OFN 1 und der LRE über lange Signalleitungen ist die Störfestigkeit der I2C-Schnittstelle für Kraftfahrzeuganwendungen aber nicht ausreichend.

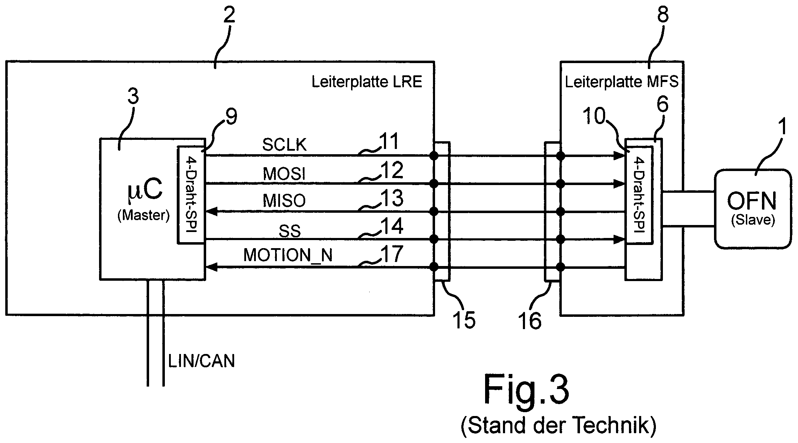

Für die Anwendung in einem Kraftfahrzeuglenkrad ausreichend robust wäre eine bekannte "SPI"-Schnittstelle" (Serial Peripheral Interface). Eine Anbindung eines OFN über eine SPI-Schnittstelle an einen Mikrocontroller 3 ist in Fig. 3 schematisch dargestellt. Wie in dem Beispiel von Fig. 2 ist die Leiterplatte 2 der Lenkradelektronik LRE mit dem Mikrocontroller 3 bestückt. Die Elektronik 6 des OFN 1 ist auf einer Leiterplatte 8 eines Multifunktionsschalters (MFS) angeordnet. Der Mikrocontroller 3 und die Elektronik 6 des OFN 1 besitzen jeweils eine SPI-Schnittstelle 9, 10. Diese SPI-Schnittstelle benötigt standardmäßig vier Datenleitungen. Drei Datenleitungen 11, 12 und 13 werden für die eigentliche Datenübertragung benötigt, nämlich SCLK (Serial Clock), MOSI (Master Out Slave In), MISO (Master In Slave Out). Über die vierte Leitung 14 (SS; Slave Select) wählt der Master (hier der Mikrocontroller 3) den Slave (hier OFN 1) aus, mit dem er kommunizieren möchte. Prinzipiell können somit mehrere Slaves mit einem Master kommunizieren, wobei sich die Slaves die drei Datenleitungen teilen können, aber jeweils eine eigene Slave-Select-Leitung benötigen. Aus den vier Signalleitungen der SPI-Schnittstelle 9, 10 resultiert allerdings ein erhöhter Bauraumbedarf im Lenkrad für die Stecker 15, 16 an den beiden Leiterplatten 2, 8 sowie den entsprechenden Kabelsatz. Hinzu kommt noch der Bauraumbedarf für eine fünfte Leitung 17, die für die Interrupt Prozedur ähnlich wie in dem Beispiel von Fig. 2 notwendig ist.

In der Consumer Elektronik wird die Datenübertragung zwischen dem Mikrocontroller 3 als Master und dem OFN 1 als Slave vom OFN 1 initiiert. Dafür wird die eigene Signalleitung 17 für den so genannten Motion_Interrupt verwendet. Detektiert das OFN 1 eine Veränderung des Berühr- oder Bewegungszustands des Fingers auf seiner Oberfläche, sendet es einen Motion-Interrupt an den Master 3. Dieser startet daraufhin die Abfrage der OFN-Daten über die serielle Schnittstelle 9, 10.

Dieses Kommunikationskonzept bringt für die Consumer Elektronik den Vorteil, dass ereignisabhängig nur dann zwischen Master und Slave kommuniziert wird, wenn eine Fingerbewegung stattfindet. Dies führt zu einem minimalen Energiebedarf, was für mobile Geräte ein wichtiger Aspekt ist. Für die Anwendung im Lenkrad ist dieser Aspekt aber zweirangig. Nachteilig für die Anwendung im Lenkrad ist, dass für den Motion-Interrupt eine zusätzliche Signalleitung benötigt wird, was die Bauraumproblematik weiter verschärft. Zum anderen lässt sich diese ereignisbasierte Kommunikation nur schwer mit der weitergehenden zyklischen Datenübertragung zwischen Lenkradelektronik und Mantelrohrschaltermodul synchronisieren.

Die Aufgabe der vorliegenden Erfindung besteht somit darin, ein Lenkrad bereitzustellen, das einen störsicheren Betrieb eines OFN bei geringem Bauraumbedarf ermöglicht.

Erfindungsgemäß wird diese Aufgabe gelöst durch ein Lenkrad nach Anspruch 1.

Vorteilhafte Weiterbildungen der Erfindung ergeben sich aus den abhängigen Ansprüchen.

Darüber hinaus wird ein Kraftfahrzeug mit einem entsprechenden Lenkrad bereitgestellt. Ein erfindungsgemäßes Lenkrad für ein Kraftfahrzeug ist also mit einem optischen Fingernavigationsmodul, einer Lenkradelektronik und einer Kommunikationseinrichtung zur Datenübertragung zwischen dem optischen Fingernavigationsmodul und der Lenkradelektronik ausgestattet. Dabei umfasst die Kommunikationseinrichtung einen seriellen Datenbus mit nur drei Leitungen, wobei zwei der drei Leitungen zur Datenübertragung und eine zur Taktübertragung ausgebildet sind.

In vorteilhafter Weise ist also zwischen dem optischen Fingernavigationsmodul und der Lenkradelektronik ein Datenbus mit ausschließlich drei Leitungen vorgesehen. Gegenüber vier oder fünf Leitungen ist somit eine deutliche Bauraumersparnis zu verzeichnen. Dadurch, dass für die Datenübertragung zwei Leitungen vorgesehen sind, kann außerdem eine Leitung zur Kommunikation von der Lenkradelektronik zum OFN und die andere Datenleitung für die Kommunikation in umgekehrter Richtung verwendet werden, wodurch die Störsicherheit weiter verbessert wird.

Vorzugsweise ist die Lenkradelektronik dazu ausgebildet, das OFN-Modul über die Kommunikationseinrichtung zyklisch abzufragen. Durch dieses zyklische Abfragen kann auf eine separate Interrupt-Leitung verzichtet werden.

Bei dem Datenbus kann es sich insbesondere um einen SPI-Datenbus handeln. Dieser zeichnet sich durch ausreichende Störfestigkeit aus.

Das OFN-Modul kann ferner dazu ausgebildet sein, eine Fingerbewegung auf der Oberfläche des OFN-Moduls als mindestens einen Differenzwert zu detektieren, der eine von einem Finger in einem Kommunikationszyklus zurückgelegte Strecke beschreibt. Durch den Differenzwert kann sicher erkannt werden, ob sich ein Finger auf der Oberfläche des OFN-Moduls bewegt hat.

Speziell kann das OFN-Modul zum Berechnen eines Summenwerts aus mehreren Differenzwerten und zum Übermitteln des Summenwerts über die Kommunikationseinrichtung zu der Lenkradelektronik ausgebildet sein. Weiterhin kann die Lenkradelektronik dazu ausgebildet sein, aus einem übermittelten Summenwert und einem gespeicherten weiteren Summenwert einen Differenzwert als Indikator für eine Fingerbewegung zu berechnen. Werden also von dem OFN-Modul Summenwerte übermittelt, kann empfangsseitig durch Verarbeitung, insbesondere Differenzwertbildung, der Summenwerte auch dann auf eine Bewegung geschlossen werden, wenn ein Datenwert aufgrund eines Fehlers nicht übermittelt wird.

In einer weiteren Ausführungsform ist die Lenkradelektronik dazu ausgebildet, eine Temperaturkompensation des OFN-Moduls anhand von internen in der Lenkradelektronik gespeicherten oder bereitgestellten Daten zu steuern. Dies hat gegenüber der üblichen Temperaturkompensation, bei der lediglich interne Daten des OFN-Moduls verwendet werden, den Vorteil, dass auch Daten, die außerhalb der Lenkradelektronik oder außerhalb des OFN-Moduls gewonnen werden, wie Umgebungstemperatur, Innenraumtemperatur etc., zur Temperaturkompensation herangezogen werden können.

Gemäß der Erfindung ist die Lenkradelektronik mit einem Mikroprozessor ausgestattet, der über mindestens zwei SPI-Schnittstellen verfügt, wobei über eine der SPI-Schnittstellen das OFN-Modul und über eine andere der SPI-Schittstellen ein weiteres OFN-Modul angeschlossen ist. Damit ist es möglich, die OFN-Module von zwei Schalterblöcken eines Lenkrads in erfindungsgemäß vorteilhafter Weise mit einer zentralen Lenkradelektronik zu verbinden.

Das Lenkrad kann außerdem mit einem Mantelrohrschaltermodul einer Lenksäule in Kommunikationsverbindung stehen, wobei eine Kommunikation zwischen dem OFN-Modul und der Lenkradelektronik mit einer Kommunikation zwischen der Lenkradelektronik und dem Mantelrohrschaltermodul synchronisiert ist. Diese Synchronisation hat den Vorteil einer zeitlich optimierten Übertragung.

Speziell ist es von Vorteil, wenn ein Kraftfahrzeug mit dem erfindungsgemäßen Lenkrad ausgestattet ist.

Die vorliegende Erfindung wird anhand der beigefügten Zeichnungen näher erläutert, in denen zeigen:
- Fig. 1: eine schematische Skizze eines Lenkrads mit optischen Fingernavigationsmodulen;
- Fig. 2: ein OFN-Modul, das gemäß dem Stand der Technik über eine I2C-Schnittstelle angeschlossen ist;
- Fig. 3: ein OFN-Modul, das gemäß dem Stand der Technik über eine 4-Draht-SPI-Schnittstelle angeschlossen ist und
- Fig. 4: ein OFN-Modul, das erfindungsgemäß mit einer 3-Draht-SPI-Schnittstelle angeschlossen ist.

Die nachfolgend näher geschilderten Ausführungsbeispiele stellen bevorzugte Ausführungsformen der vorliegenden Erfindung dar.

In Fig. 1 ist schematisch ein Lenkrad 18 dargestellt. An dem Lenkrad befinden sich hier in ergonomisch passenden Positionen zwei Schalterblöcke 19 und 20, die auch als Multifunktionsschalter (MFS) bezeichnet werden können. In anderen Ausführungsbeispielen ist nur ein derartiger Schalterblock oder sind mehr als zwei Schalterblöcke bzw. Multifunktionsschalter vorgesehen.

In dem Beispiel von Fig. 1 besitzt jeder Schalterblock 19, 20 ein optisches Fingernavigationsmodul (OFN). Darüber hinaus besitzen die Schalterblöcke 19 und 20 jeweils weitere mechanische Bedienelemente 21. Zur Übermittlung der Daten vom linken Schalterblock 19 zu einer Lenkradelektronik 22 (LRE) dient ein Kabel 23, das an seinen Enden jeweils mit Steckern 24 ausgestattet ist. Analog hierzu erfolgt die Kommunikation von dem rechten Schalterblock 20 zu der Lenkradelektronik 22 über ein Kabel 25. Der Signalausgang von der Lenkradelektronik 22 zu beispielsweise einem Mantelrohrschaltermodul (in Fig. 1 nicht dargestellt) erfolgt über ein weiteres Kabel 26.

Wie bereits eingangs erwähnt, dient jedes OFN 1 als Sensor für die Detektion von Fingerbewegungen. Die Kabel 23 und 25 dienen zur Realisierung einer Datenbusverbindung bzw. Kommunikationseinrichtung zwischen den OFN-Modulen 1 und der Lenkradelektronik 22.

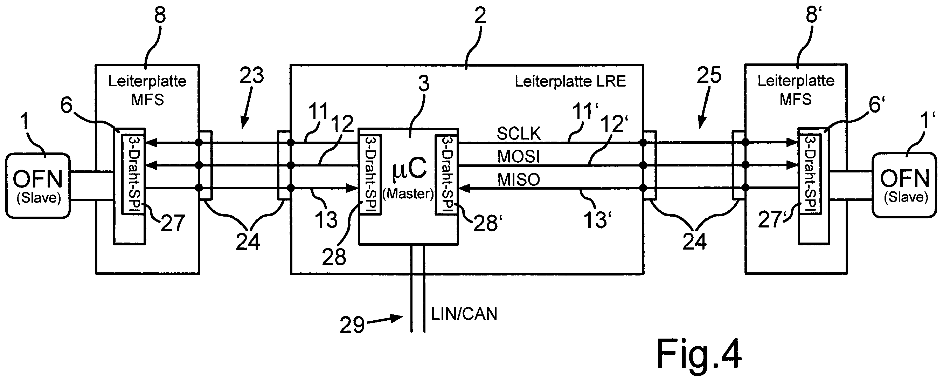

Die Kommunikationsverbindung zwischen den OFN-Modulen (kurz: OFN) und der Lenkradelektronik 22 ist in Fig. 4 schematisch wiedergegeben. Auch in diesem Beispiel ist das Lenkrad mit zwei OFN 1 und 1' ausgebildet. Die Anzahl kann jedoch je nach Ausführungsform, wie oben erwähnt, variieren.

Wie in dem Beispiel von Fig. 3 ist ein Stecker 6 auf der Leiterplatte 8 des Multifunktionsschalters angeordnet. Das OFN 1 ist über den Stecker 6 mit der Leiterplatte 8 verbunden. Das OFN 1 besitzt eine 3-Draht-SPI-Schnittstelle 27, über die es mit dem Mikrocontroller 3, der sich auf der Leiterplatte 2 der Lenkradelektronik befindet, in Verbindung steht. Das erste Kabel 23 mit den Steckern 24 ist entsprechend dreiadrig ausgelegt und verbindet die Leiterplatte 8 mit der Leiterplatte 2.

Der Mikrocontroller 3 auf der Leiterplatte 2 der Lenkradelektronik besitzt eine erste 3-Draht-SPI-Schnittstelle 28. Die drei Signalleitungen 11 bis 13 korrespondieren mit den ersten drei Signalleitungen der 4-Draht-SPI-Schnittstelle vom Beispiel von Fig. 3. Demnach ist die Signalleitung 11 dem "Serial Clock" SCLK, die Datenleitung 12 dem "Master Out Slave In" MOSI und die Datenleitung 13 dem "Master In Slave Out" MISO zugeordnet. Der Mikrocontroller 3 taktet demnach den OFN 1.

Analog hierzu ist das rechte OFN 1', dessen Stecker 6' auf der Leiterplatte 8' des rechten Multifunktionsschalters angeordnet ist, datentechnisch mit dem Mikrocontroller 3 der Lenkradelektronik auf der Leiterplatte 2 verbunden. Hierzu besitzt das OFN 1' ebenfalls eine 3-Draht-SPI-Schnittstelle 27', die an eine korrespondierende 3-Draht-SPI-Schnittstelle 28' des Mikrocontrollers 3 über das Kabel 25 mit den Steckern 24 angeschlossen ist. Die drei Signalleitungen 11' bis 13' (der Einfachheit halber auch Datenleitungen genannt) führen analog die Signale bzw. Daten SCLK, MOSI und MISO.

Der Mikrocontroller 3 ist über einen Datenbus 29 mit weiterer Elektronik, insbesondere einem Mantelrohrschaltermodul verbunden. Bei dem Datenbus 29 kann es sich um einen LIN- oder CAN-Bus handeln.

Bei der erfindungsgemäßen Kommunikationsverbindung bzw. -einrichtung ist also für das bzw. die OFN 1, 1' eine 3-Draht-SPI-Schnittstelle gewählt, bei der auf die Slave-Select- und die Motion-Interrupt-Leitungen verzichtet wird. Damit ergibt sich ein entsprechender Bauraumvorteil gegenüber der Realisierung von Fig. 3 bei gleichbleibender Störfestigkeit.

Aufgrund der Topologie im Lenkrad müssen das linke und rechte OFN 1, 1' ohnehin über eigene Kabel 23, 25 mit der Lenkradelektronik verbunden werden. Das bedeutet, dass jedes OFN, wie oben beschrieben, über die eigenen SPI-Datenleitungen 11 bis 13 bzw. 11' bis 13' verfügt. Wird nun in der Lenkradelektronik der Mikrocontroller 3 mit den zwei SPI-Schnittstellen verwendet, an die das jeweilige OFN angebunden wird, kann auf die Slave-Select-Leitungen verzichtet werden. Es gibt nämlich pro SPI-Schnittstelle 28, 28' nur einen Slave (OFN), der immer aktiv ist und mit dem Master (LRE bzw. Mikrocontroller 3) kommuniziert.

Außerdem wird die Kommunikation zwischen der Lenkradelektronik LRE und OFN ausschließlich von der LRE als Master gesteuert. Die LRE fragt jedes OFN kontinuierlich in kurzen Zeitabständen, also zyklisch, ab, sodass Veränderungen des Fingerzustandes schnell erkannt werden. Der aus dieser Abfragestrategie resultierende, im Vergleich zu einer ereignisgesteuerten Kommunikation leicht erhöhte Energiebedarf ist für die Anwendung im Lenkrad akzeptabel. Die Vorteile sind, dass die Motion-Interrupt-Leitung nicht mehr benötigt wird und die SPI-Kommunikation mit der weiteren Datenübertragung per LIN- oder CAN-Bus zum Mantelrohrschaltermodul synchronisiert werden kann.

Neben der hardwareseitigen Anpassung der SPI-Schnittstelle können zusätzlich auch protokollseitige Optimierungen vorgenommen werden. Dies wird im Folgenden näher erläutert.
Das OFN 1 bzw. 1' erfasst typischerweise eine Fingerbewegung in Form von Differenzwerten Δx und Δy, die die Bewegung des Fingers in der jeweiligen Koordinatenrichtung (x- und y-Achse) seit der letzten Datenabfrage über die serielle Schnittstelle beschreiben. In der Consumer-Elektronik werden diese Differenzwerte direkt übertragen. Geht dabei eine Botschaft aufgrund äußerer Störeinflüsse verloren, besteht keine Möglichkeit, ihren Inhalt aus der jeweils vorausgegangenen und nachfolgenden Botschaft zu rekonstruieren.
Aus diesem Grund überträgt das OFN 1 bzw. 1' im Lenkrad hier nicht die Differenzwerte Δx und Δy, sondern die daraus fortlaufend berechneten Summenwerte x und y. Demnach berechnet sich der Summenwert x als Summe aus allen vorausgegangenen Differenzwerten Δx und der Summenwert y als Summe aller vorausgegangenen Differenzwerte Δy. In der LRE werden dann wieder die Differenzwerte durch Subtraktion der letzten von den aktuellen Summenwerten gebildet. Sollte nun eine Botschaft verloren gehen, kann die Differenz auch aus den Werten der nachfolgenden und der vorausgegangenen Botschaften gebildet werden. So kann der Verlust der Botschaft kompensiert werden.

Um die Fingerbewegung unter allen Temperaturbedingungen korrekt erfassen zu können, muss das OFN 1 bzw. 1' von Zeit zu Zeit eine Temperaturkompensation seiner Sensorik durchführen. In der Consumer-Elektronik bestimmt das OFN den Zeitpunkt dafür selbst. Typischerweise erfolgt die Temperaturkompensation automatisch in festgelegten Zeitabständen. Bei der Anwendung im Lenkrad steuert dagegen die LRE über die SPI-Schnittstelle die Temperaturkompensation im OFN. Durch die Datenverbindung mit dem Fahrzeug (Datenbus 29) liegen in der LRE viele Kontextinformationen vor, anhand derer entschieden werden kann, ob und in welchen Zeitabständen eine Temperaturkompensation notwendig ist. Relevante Informationen sind z. B. die Umgebungstemperatur, die Innenraumtemperatur und der Betriebszustand der Lenkradheizung.

Die Vorteile der 3-Draht-SPI-Schnittstelle zwischen OFN und LRE liegen in einem minimalen Bauraumbedarf für die Stecker und den Kabelsatz sowie in einer gegen äußere Störeinflüsse robusten Datenübertragung. Mit insgesamt drei Signalleitungen werden nicht mehr Leitungen wie in der Consumer-Elektronik benötigt. Gleichzeitig können das OFN und die LRE räumlich getrennt werden.

## Patentansprüche

1. Lenkrad (18) für ein Kraftfahrzeug mit
- zwei optischen Fingernavigationsmodulen (1, 1'),
- einer Lenkradelektronik (22) und
- einer Kommunikationseinrichtung zur Datenübertragung zwischen jedem optischen Fingernavigationsmodul und der Lenkradelektronik, wobei
- die Kommunikationseinrichtung einen als SPI-Datenbus ausgeführten Datenbus (11, 12, 13; 11', 12', 13') umfasst, wobei der SPI-Datenbus aus zwei Leitungen zur Datenübertragung und einer Leitung zur Taktübertragung besteht, und
- die Lenkradelektronik (22) mit einem Mikroprozessor (3) ausgestattet ist, der über mindestens zwei SPI-Schnittstellen (28, 28') verfügt, wobei über eine der SPI-Schnittstellen mittels erster SPI-Datenleitungen (11, 12, 13) das erste Fingernavigationsmodul (1) und über eine andere der SPI-Schnittstellen mittels zweiter SPI-Datenleitungen (11', 12', 13') das zweite Fingernavigationsmodul (1') angeschlossen ist.

2. Lenkrad nach Anspruch 1,
**dadurch gekennzeichnet, dass**
die Lenkradelektronik (22) dazu ausgebildet ist, die optischen Fingernavigationsmodule (1, 1') über die Kommunikationseinrichtung zyklisch abzufragen.

3. Lenkrad nach einem der vorhergehenden Ansprüche,
**dadurch gekennzeichnet, dass** die optischen Fingernavigationsmodule (1, 1') dazu ausgebildet sind, eine Fingerbewegung auf der Oberfläche des optischen Fingernavigationsmoduls als mindestens einen Differenzwert zu detektieren, der eine von einem Finger in einem Kommunikationszyklus zurückgelegte Strecke beschreibt.

4. Lenkrad nach. Anspruch 3,
**dadurch gekennzeichnet, dass** die optischen Fingernavigationsmodule (1, 1') zum Berechnen eines Summenwerts aus mehreren Differenzwerten und zum Übermitteln des Summenwerts über die Kommunikationseinrichtung zu der Lenkradelektronik (22) ausgebildet sind.

5. Lenkrad nach Anspruch 4,
**dadurch gekennzeichnet, dass**
die Lenkradelektronik (22) dazu ausgebildet ist, aus dem übermittelten Summenwert und einem gespeicherten weiteren Summenwert einen Differenzwert als Indikator für eine Fingerbewegung zu berechnen.

6. Lenkrad nach einem der vorhergehenden Ansprüche,
**dadurch gekennzeichnet, dass**
die Lenkradelektronik (22) dazu ausgebildet ist, eine Temperaturkompensation der optischen Fingernavigationsmodule (1, 1') anhand von internen, in der Lenkradelektronik gespeicherten oder bereitgestellten Daten zu steuern.

7. Lenkrad nach einem der vorhergehenden Ansprüche,
**dadurch gekennzeichnet, dass**
es mit einem Mantelrohrschaltermodul einer Längssäule in Kommunikationsverbindung steht, und eine Kommunikation zwischen den optischen Fingernavigationsmodulen (1, 1') und der Lenkradelektronik (22) mit einer Kommunikation zwischen der Lenkradelektronik (22) und dem Mantelrohrschaltermodul synchronisiert ist.

8. Kraftfahrzeug mit einem Lenkrad nach einem der vorhergehenden Ansprüche.

## Claims

1. Steering wheel (18) for a motor vehicle, comprising
- two optical finger navigation modules (1, 1'),
- steering wheel electronics (22) and
- a communication device for data transmission between each finger navigation module and the steering wheel electronics, wherein
- the communication device comprises a data bus (11, 12, 13; 11', 12', 13') designed as an SPI data bus, wherein the SPI data bus consists of two lines for data transmission and one line for clock transmission and
- the steering wheel electronics (22) are provided with a microprocessor (3) having at least two SPI interfaces (28. 28'), wherein the first finger navigation module (1) is connected via one of the SPI interfaces by means of first SPI data lines (11, 12, 13) and the second finger navigation module (1') is connected via another of the SPI interfaces by means of second SPI data lines (11', 12', 13').

2. Steering wheel according to claim 1,
**characterised in that**
the steering wheel electronics (22) are designed for cyclical prompting of the optical finger navigation modules (1, 1') via the communication device.

3. Steering wheel according to any of the preceding claims,
**characterised in that**
the optical finger navigation modules (1, 1') are designed to detect a finger movement on the surface of the optical finger navigation module as at least one differential value describing a distance covered by a finger in a communication cycle.

4. Steering wheel according to claim 3,
**characterised in that**
the optical finger navigation modules (1, 1') are designed to calculate a sum value from several differential values and to transmit the sum value to the steering wheel electronics (22) via the communication device.

5. Steering wheel according to claim 4,
**characterised in that**
the steering wheel electronics (22) are designed to calculate from the transmitted sum value and a stored further sum value a differential value as an indicator for a finger movement.

6. Steering wheel according to any of the preceding claims,
**characterised in that**
the steering wheel electronics (22) are designed to control a temperature compensation of the optical finger navigation modules (1, 1') using internal data stored or provided in the steering wheel electronics.

7. Steering wheel according to any of the preceding claims,
**characterised in that**
it is in communication with a jacket tube switch module of a longitudinal column and **in that** a communication between the optical finger navigation modules (1, 1') and the steering wheel electronics (22) is synchronised with a communication between the steering wheel electronics (22) and the jacket tube switch module.

8. Motor vehicle with a steering wheel according to any of the preceding claims.

## Revendications

1. Volant de direction (18) pour un véhicule automobile comprenant
- deux modules de navigation optiques au doigt (1, 1')
- une électronique de volant de direction (22) et
- un dispositif de communication pour le transfert de données entre chaque module de navigation optique au doigt et l'électronique de volant de direction,
- le dispositif de communication comprenant un bus de données (11, 12, 13, 11', 12', 13') conçu sous la forme de bus de données SPI, le bus de données SPI étant constitué de deux lignes de transfert de données et d'une ligne de transmission d'horloge, et
- l'électronique de volant de direction (22) étant équipée d'un microprocesseur (3) qui dispose d'au moins deux interfaces SPI (28, 28') par l'une des interfaces SPI au moyen de premières lignes de données SPI (11, 12, 13) est raccordé le premier module de navigation au doigt (1) et par une autre des interfaces SPI au moyen de secondes lignes de données SPI (11', 12', 13') le second module de navigation au doigt (1').

2. Volant de direction selon la revendication 1, **caractérisé en ce que** l'électronique de volant de direction (22) était conçu pour appeler cycliquement les modules de navigation optiques au doigt par le dispositif de communication.

3. Volant de direction selon l'une quelconque des revendications précédentes, **caractérisé en ce que** les modules de navigation optique au doigt sont conçus pour détecter un mouvement du doigt sur la surface du module de navigation optique au doigt en tant qu'au moins une valeur de différence qui décrit un parcours accompli par un doigt dans un cycle de communication.

4. Volant de direction selon la revendication 3, **caractérisé en ce que** les modules de navigation optique au doigt (1, 1') sont conçus pour calculer une valeur cumulée à partir de plusieurs valeurs de différence et pour transmettre la valeur cumulée par l'intermédiaire du dispositif de communication à l'électronique du volant de direction (22).

5. Volant de direction selon la revendication 4, **caractérisé en ce que** l'électronique du volant de direction (22) est conçu pour calculer à partir de la valeur cumulée déterminée et d'une autre valeur cumulée mémorisée, une valeur de différence en tant qu'indicateur pour un mouvement de doigt.

6. Volant de direction selon l'une quelconque des revendications précédentes, **caractérisé en ce que** l'électronique de volant de direction (22) est conçu pour commander une compensation de température des modules de navigation optiques au doigt (1, 1') au moyen de données mémorisées ou fournies en interne dans l'électronique du volant de direction.

7. Volant de direction selon l'une des revendications précédentes, **caractérisé en ce qu'**il est en communication avec un module de commutation d'enveloppe tubulaire d'une colonne longitudinale et une communication entre les modules de navigation optiques au doigt (1, 1') et l'électronique du volant de direction (22) est synchronisé avec une communication entre l'électronique du volant de direction (22) et le module de commutation d'enveloppe tubulaire.

8. Véhicule automobile comprenant un volant de direction selon l'une des revendications précédentes.
